# FASCICULE DE BREVET EUROPEEN

(11) **EP 2 228 627 B1**
(45) Date de publication et mention de la délivrance du brevet: **16.10.2013**
(21) Numéro de dépôt: 09305234.8
(22) Date de dépôt: 13.03.2009
(51) Int. Cl.: G01D 4/00

(54) **Systeme d'aide au deploiement d'un reseau fixe de tele releve de compteurs**
Hilfssystem zur Installation eines festen Netzwerkes zur Fernabfrage von Zählern
System to assist the deployment of a fixed network for remote reading of meters

(43) Date de publication de la demande: 15.09.2010
(73) Titulaire: Actaris SAS, 92100 Boulogne Billancourt (FR)
(72) Inventeur: Rigomier, Vincent, 71118 SAINT MARTIN BELLE ROCHE (FR); Bottner, Michel, 71850 CHARNAY LES MACON (FR)
(74) Mandataire: Howson, Richard G.B.

(56) Documents cités:
- EP-A2- 1 512 944
- US-A- 5 056 107
- US-B1- 6 940 838

## Description

La présente invention concerne la télé-relève de compteurs d'eau, de gaz, d'énergie thermique ou d'électricité, ces compteurs pouvant être des compteurs domestiques ou industriels associés chacun à un module de communication par ondes radiofréquences.

Il existe à ce jour plusieurs types de réseaux permettant la télé-relève de compteurs par radio fréquence :
- Le réseau de télé-relève appelé « walk by », dans lequel une personne, appelée le releveur, se déplace à pieds (d'où la dénomination "walk by" en anglais) et dispose d'un ordinateur ou terminal portable muni d'une interface radio, par exemple un appareil du type commercialisé par la Demanderesse sous la marque enregistrée Easyco pour un compteur d'eau. Quand il passe à proximité d'un compteur ou d'un groupe de compteurs comportant chacun un module de communication radio (par exemple un module du type commercialisé par la Demanderesse sous la marque enregistrée Cyble), il les interroge à l'aide de son terminal en envoyant un signal d'interrogation, ordonnant à ce ou ces compteur(s) d'envoyer leurs données. La distance entre le releveur et le compteur est rarement supérieure à une centaine de mètres. Le signal d'interrogation est envoyé aux compteurs se trouvant dans la zone de couverture du signal de réveil et les compteurs répondent en envoyant un signal de réponse à l'ordinateur. La communication radio entre les modules des compteurs et l'ordinateur portable est bidirectionnelle, c'est-à-dire qu'elle peut être établie dans le sens du module vers l'ordinateur et inversement.
- Le réseau de télé-relève appelé « drive by » : ce réseau est proche du « walk by », mais dans ce cas, le releveur se déplace à l'aide d'un véhicule.
- Le réseau de télé-relève appelé « réseau fixe » (« fixed network » en anglais) : ici, les compteurs équipés de modules de communication radio ne communiquent généralement pas directement avec l'ordinateur mais par l'intermédiaire d'un point d'accès ou collecteur principal et d'un ou plusieurs collecteurs-relais intermédiaires chargés de relayer les signaux entre les modules de communication radio et le point d'accès ou collecteur principal. Dans ce type de réseau, les communications radio peuvent être monodirectionnelles (des modules de communication radio vers le collecteur principal, en passant par les collecteurs intermédiaires faisant office de relais), ou bidirectionnelles.

On s'intéresse dans la suite uniquement aux réseaux dits fixes, qui ont à ce jour la faveur des opérateurs du fait notamment qu'ils ne nécessitent pas de déplacement de personnes pour effectuer la télé-relève des différents compteurs.

On s'intéresse plus particulièrement à l'implantation de tels réseaux fixes, soit dans le cadre d'un nouveau déploiement de réseau, soit dans le cadre d'une extension d'un réseau déjà existant, une telle implantation nécessitant de définir avec précision les meilleurs emplacements géographiques des modules de communication radiofréquence, des collecteurs-relais intermédiaires et du point d'accès ou collecteur principal.

La position des différents compteurs, et par suite des modules de communication radio qui leurs sont associés, est figée par le réseau de distribution de service (eau, électricité ou gaz). Dans la plupart des cas, l'emplacement géographique du point d'accès ou collecteur principal est également imposé, du fait qu'il doit être alimenté par le réseau électrique.

La difficulté dans le déploiement d'un réseau fixe réside par conséquent essentiellement dans le choix de positionnement des collecteurs-relais intermédiaires de façon à garantir un niveau de liaison radio avec suffisamment de marge tout en minimisant leurs nombres afin de transférer les données du compteur jusqu'au point d'accès ou collecteur principal.

A ce jour, il existe essentiellement deux méthodes d'assistance au déploiement d'un réseau fixe de télé relève :

Dans une première méthode connue, des estimations sur plan permettent de déterminer plus ou moins le nombre de collecteurs-relais intermédiaires à positionner. Cette solution n'est cependant pas satisfaisante pour les raisons suivantes :
- la propagation radio n'étant pas une science exacte, les distances de communication varient en fonction de la position du compteur (regards, gaine palière, ...) et de l'environnement (nature des murs, densité de l'habitat ...), et il est nécessaire de définir au préalable des modèles de propagation pour estimer les distances en fonction des caractéristiques du terrain.
- cette méthode de modélisation ne permet pas de définir la marge de sécurité sur la communication radio avant installation du réseau.

Une autre solution connue consiste à effectuer in situ des bilans de liaisons radiofréquences en utilisant des instruments standards de mesure radio, tels qu'un générateur de fréquence et un analyseur de spectre permettant de mesurer les pertes de puissance en transmission. Cette solution n'est cependant pas davantage satisfaisante du fait qu'elle nécessite des intervenants expérimentés et spécialistes de la radiofréquence, pour d'une part, utiliser ces instruments de mesure, mais surtout pour interpréter les résultats. Notamment, les résultats en termes de perte de puissance ne permettent pas de déduire directement si la marge tolérée par les équipements qui vont être effectivement implantés va être respectée. En outre, les instruments de mesure sont physiquement et structurellement très différents des équipements à installer, de sorte que les pertes de transmission ainsi mesurées peuvent ne pas refléter les pertes de transmission effectives une fois le réseau implanté.

Le document US 5 056 107 A décrit un système d'assistance au déploiement d'un réseau de télé, comprennant un appareil portable étant apte à transmettre des messages simulés pouvant être variable en longeur, format et puissance.

L'objectif de la présente invention est de mettre à disposition d'installateurs sans aucune compétence radio, un système d'assistance au déploiement d'un réseau de télé relève fixe simple permettant de connaître la position future optimale des différents équipements du réseau, en particulier les collecteurs- relais intermédiaires, et d'optimiser le nombre d'équipements nécessaire à la couverture du réseau.

Cet objectif est atteint grâce à l'invention qui a pour premier objet un système d'aide au déploiement d'un réseau fixe de télé relève conforme à la revendication 1.

L'utilisation d'un tel système consistera de préférence à implémenter les étapes selon la revendication 9.

D'autres particularités et avantages de l'invention apparaîtront au vu de la description suivante d'un système conforme à l'invention et de son utilisation dans le cadre de l'aide au déploiement d'un réseau fixe de télé relève, faite en référence aux figures annexées, dans lesquelles :
- la figure 1 illustre schématiquement les différents composants du système d'aide au déploiement d'un réseau fixe de télé-relève selon l'invention, ainsi que leurs interactions ;
- la figure 2 illustre plus précisément un exemple d'unité portative de commande et de visualisation du système de la figure 1 ;
- les figures 3a à 3j illustrent, pour un exemple de réseau fixe à déployer, les différentes étapes d'utilisation du système d'aide au déploiement selon l'invention.

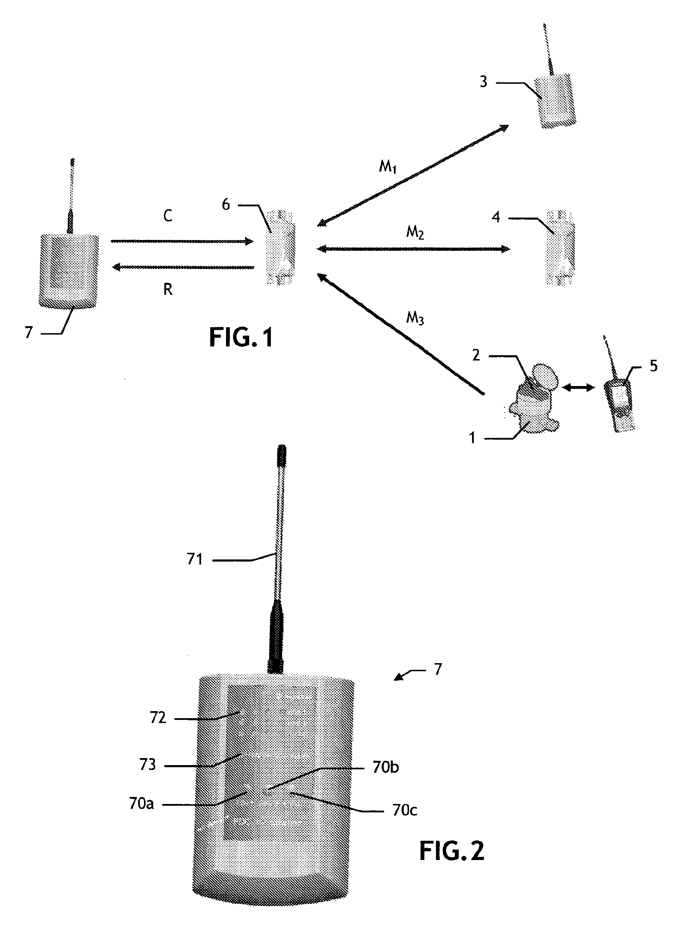

En référence à la figure 1, les différents composants d'un système d'aide au déploiement d'un réseau fixe de télé relève de compteurs, ainsi que leurs interactions, vont à présent être décrits. On rappelle que le réseau fixe à déployer est du type permettant à un point d'accès ou collecteur principal de récupérer, par voie radio, des données de mesure d'une pluralité de compteurs 1. Ces données sont destinées à être transmises par l'intermédiaire d'un module 2 de communication radiofréquence associé à chaque compteur, et relayées à destination dudit point d'accès ou collecteur principal par l'intermédiaire d'au moins un collecteur intermédiaire. A titre d'exemple non limitatif appliqué à la télé relève de compteurs d'eau, les modules 2 de communication radiofréquence pourront être ceux commercialisés par la Demanderesse sous la marque enregistrée Cyble.

Le système permettant de définir très précisément les implantations géographiques optimales futures des différents équipements du réseau, en particulier du point d'accès et des collecteurs intermédiaires comporte les composantes suivantes :
- un premier appareil mobile 3 apte à simuler le fonctionnement radiofréquence dudit point d'accès ou collecteur principal,
- un deuxième appareil mobile 4 apte à simuler le fonctionnement en réception et en relais radiofréquence d'un collecteur intermédiaire,
- un appareil portatif de télé relève 5 apte à échanger des données avec chaque module 2 de communication radiofréquence, cet appareil pouvant par exemple être du type commercialisé par la Demanderesse sous la marque enregistrée Easyco et développé pour des réseaux du type « walk-by » décrits précédemment,
- un appareil mobile de mesure 6 apte notamment à simuler le fonctionnement en réception radiofréquence d'un collecteur intermédiaire ; et
- une unité portative 7 de commande radiofréquence et de visualisation.

Par « mobile », on entend tout appareil destiné à occuper une position fixe, mais apte, du fait de son faible encombrement, à être déplacé dans différentes positions géographiques.

Par « portatif » ou « portative », on entend tout équipement destiné à être porté par l'installateur dans le cadre de son utilisation.

Par « simuler », on entend se comporter comme l'équipement futur du réseau, en reproduisant fidèlement le comportement des propagations radiofréquences.

Ainsi, le premier appareil mobile 3 doit remplacer le plus fidèlement possible le point d'accès ou collecteur principal qu'il est censé représenter. A cette fin, l'interface radiofréquence, et notamment l'antenne utilisée, doivent être les mêmes que celles équipant un véritable point d'accès. Pour reproduire fidèlement le comportement, on essaiera également, dans la mesure du possible, de concevoir un premier appareil mobile qui présente sensiblement un encombrement équivalent au collecteur principal réel, de façon notamment à pourvoir occuper les mêmes positions et présenter les mêmes orientations d'antenne que le collecteur principal réel, et reproduire ainsi le même comportement sur le plan radiofréquence.

Le deuxième appareil mobile 4 doit également remplacer le plus fidèlement possible tout collecteur intermédiaire qu'il est censé représenter. Ainsi, son fonctionnement radiofréquence tant à la réception que dans sa faculté de relayer l'information, doit pouvoir être testé. On pourra par exemple utiliser directement un collecteur intermédiaire, destiné uniquement à des fins d'aide au déploiement, ou bien un équipement similaire en termes de fonctionnement radiofréquence et d'encombrement. Ici encore, on s'attachera à ce que l'antenne et les performances radio soient identiques à celles des collecteurs intermédiaires, et à ce que la forme de l'appareil soit suffisamment similaire à celle d'un collecteur réel pour pouvoir adopter des positions et conférer des orientations d'antenne qui reflètent au mieux la réalité.

L'appareil mobile de mesure 6, dont on comprendra l'importance dans l'exposé qui suit, doit reproduire le plus fidèlement possible la réception radiofréquence d'un collecteur intermédiaire. Dans cette fonction, il n'est pas très différent du deuxième appareil mobile 4. Ici encore et pour les mêmes raisons que celles citées précédemment, on s'attachera à ce que l'antenne soit identique à celle utilisée dans les collecteurs intermédiaires, et à ce que la forme de l'appareil soit suffisamment similaire à celle d'un collecteur réel, de manière à reproduire fidèlement le comportement des propagations radiofréquences.

En outre, conformément à l'invention, l'unité portative 7 est apte à commander par voie radio le fonctionnement de l'appareil mobile 6 de mesure dans trois modes de fonctionnement distincts :
Le premier mode M₁ correspond à un mode dit point d'accès/collecteur, dans lequel l'appareil mobile de mesure 6 va initier un échange de communication radiofréquence avec le premier appareil mobile 3 simulant le fonctionnement du point d'accès, puis effectuer une mesure indicative de l'intensité du signal qu'il reçoit du premier appareil mobile 3 lors de cet échange;
Le deuxième mode M₂ correspond à un mode dit collecteur/collecteur, dans lequel l'appareil mobile de mesure 6 initie un échange de communication radiofréquence avec le deuxième appareil mobile 4 simulant le fonctionnement du collecteur intermédiaire, et effectuer une mesure indicative de l'intensité du signal qu'il reçoit du deuxième appareil mobile 4 lors de cet échange;
Le troisième mode M₃ correspond à un mode d'écoute. Dans ce mode, l'appareil mobile de mesure 6 intercepte un signal de réponse transmis par un module 2 de communication radiofréquence en réponse à un signal d'interrogation émis par l'appareil portatif de télé relève 5, et effectue une mesure indicative de l'intensité du signal intercepté ;
En conséquence, tous les tests sont effectués par l'appareil mobile de mesure 6, sous la commande radiofréquence C de l'unité portative 7. Dans les trois modes M₁ à M₃ précités, les mesures réalisées par l'appareil mobile de mesure sont par exemple du type mesure RSSI (initiales anglo-saxonnes mises pour Received Signal Strength Indication).

Quel que soit le mode de fonctionnement M₁ à M₃ utilisé, la mesure réalisée par l'appareil mobile de mesure 6 est transmise sous forme d'un signal radiofréquence R à l'unité portative 7, laquelle est apte à recevoir cette mesure.

L'unité portative 7 comporte des programmes permettant d'élaborer, à partir de la mesure ainsi reçue, une information relative à la qualité de la liaison radiofréquence déterminée à partir de ladite mesure. Cette information, qui prend en compte les différentes marges de sécurité imposées en termes de qualité de la liaison radiofréquence, est directement utilisable par l'installateur pour lui permettre de décider si un emplacement testé offre une qualité suffisante ou non pour une implantation future. A cette fin, l'unité portative 7 comporte des moyens 72 de visualisation de cette information.

La figure 2 montre un détail de réalisation possible d'une unité portative 7 de commande radiofréquence et de visualisation, illustrant l'interface de l'unité portative avec l'installateur.

Pour permettre à l'installateur de pouvoir sélectionner et lancer les tests selon l'un quelconque des trois modes M₁ à M₃ précités, comporte avantageusement trois boutons 70a-70c de commande à actionnement manuel. Ce mode de commande répond à des soucis de simplicité et de coûts optimisés, mais bien entendu, l'interface de commande pourrait être plus complexe, et mettre en oeuvre par exemple une sélection par déroulement dans un menu spécifique apparaissent sur un écran d'affichage.

L'unité 7 comporte en outre une antenne radiofréquence 71 pour l'émission de la commande C et pour la réception du signal R comportant la mesure effectuée par l'appareil mobile de mesure 6 dans l'un des trois modes M₁ à M₃.

Les moyens de visualisation de l'unité portative 7 comportent, dans l'exemple, des diodes électroluminescentes 72. Dans le mode de réalisation préférentiel illustré sur la figure 2, ces moyens de visualisation comportent trois ensembles de diodes électroluminescentes, chaque ensemble étant affecté à la visualisation de l'information relative à la qualité de la liaison pour l'un des trois modes de fonctionnement. On considère par exemple que :
- la première rangée de quatre diodes située sur la partie supérieure de l'unité portative 7 permet la visualisation de l'information relative à la qualité de la liaison lorsque l'appareil mobile de mesure 6 est dans le mode M₁ ;
- la deuxième rangée de quatre diodes permet la visualisation de l'information relative à la qualité de la liaison lorsque l'appareil mobile de mesure 6 est dans le mode M₂ ;
- la troisième rangée de quatre diodes permet la visualisation de l'information relative à la qualité de la liaison lorsque l'appareil mobile de mesure 6 est dans le mode M₃.

Pour permettre à l'installateur une interprétation directe, on prévoit qu'un nombre de diodes de chaque ensemble, fonction de la qualité de la liaison, soit contrôlé pour s'allumer. Par exemple, on peut calibrer l'unité portative de sorte que si au moins les deux diodes les plus à gauche de chaque ensemble sont allumées, l'installateur pourra conclure directement que la liaison radiofréquence testée est satisfaisante, et valider ainsi un emplacement géographique potentiel futur.

A l'inverse, si aucune diode ou seulement une diode est allumée, l'installateur décidera que l'emplacement n'est pas adapté.

Les diodes peuvent en outre être commandées pour indiquer d'autres types d'information à l'installateur. Par exemple, on peut prévoir que :
- la diode la plus à gauche de chaque ensemble clignote tant que la mesure est en cours ;
- les quatre diodes d'un même ensemble se mettent à clignoter lorsque la communication sur la liaison testée a échouée (cas des modes M₁ ou M₂) ou lorsque l'appareil mobile de mesure 6 n'a intercepté aucun signal de réponse (cas du mode M₃) ;
- les deux diodes les plus à gauche d'un même ensemble se mettent à clignoter lorsque la communication entre l'unité portative 7 et l'appareil de mesure 6 a échoué.

On notera que d'autres interfaces de visualisation pourraient être utilisées sans départir du cadre de l'invention : par exemple, on peut envisager l'affichage direct d'un message de validation ou de non validation sur un écran à cristaux liquides. L'important ici est de pouvoir permettre à l'installateur d'obtenir directement une validation ou au contraire une non validation d'un emplacement géographique testé in situ.

De manière préférentielle, aucune commande C n'est envoyée l'appareil de mesure 6 par l'unité de commande 7 tant qu'il n'a pas été contrôlé que le taux d'occupation de fréquence permettait de procéder efficacement au test. En effet, si la bande de fréquence est déjà occupée par une autre application, il y a un risque que les mesures soient erronées. Aussi, l'unité portative 7 de commande radiofréquence et de visualisation est avantageusement apte à mesurer automatiquement le taux d'occupation de fréquence utilisée pour les communications, préalablement à tout échange radiofréquence entre l'unité portative 7 et l'appareil mobile de mesure 6.

Pour permettre à l'installateur de décider de la conduite à tenir, l'unité portative 7 de commande et de visualisation comporte avantageusement une diode électroluminescente additionnelle 73 contrôlée pour être allumée lorsque le taux d'occupation de la fréquence est supérieur à un seuil prédéterminé. Dans ce cas, l'installateur sait qu'il devra relancer la mesure.

Grâce à l'invention, tout installateur sans compétence radio particulière peut donc très simplement effectuer les tests et valider ou au contraire invalider différents emplacements géographiques grâce à l'équipement dont il dispose. Les différents éléments mobiles et portatifs sont de préférence réunis dans une même valisette, sous forme d'un kit aisément transportable.

On ne rentrera pas plus dans le détail en ce qui concerne la description des moyens radios et logiciels utilisés dans chacun des équipements mobiles et portatifs composant le système, ces moyens radios et logiciels étant très classiques et ne présentant pas de particularités spécifiques à l'invention. On prévoira néanmoins d'appairer les différents équipements d'un même kit, pour éviter toute interférence avec d'autres kits, ou avec d'autres systèmes radiofréquences. Pour ce faire, il suffit de prévoir notamment que :
- tous les messages de commande C envoyés par l'unité portative 7 comportent, de préférence dans une entête, un identifiant unique de manière à servir à la commande d'un unique appareil mobile de mesure 6 appartenant au même kit ;
- toutes les requêtes radiofréquences envoyées par l'appareil mobile de mesure 6 à l'appareil mobile 4 simulant le fonctionnement d'un collecteur intermédiaire comprennent également un identifiant qui ne sera reconnu que par cet appareil mobile 4 ;
- toutes les réponses radiofréquences envoyées par l'appareil mobile 4 simulant le fonctionnement d'un collecteur intermédiaire comprennent également un identifiant qui ne sera reconnu que par l'appareil mobile de mesure 6 dont les requêtes sont issues ;
- l'appareil mobile de mesure 6 n'est apte à écouter (mode M₃) que les signaux des modules 2 qui sont émis en réponse du seul appareil portatif de télé relève 5 appartenant au même kit.

Les fréquences radios utilisées pour faire communiquer les différentes composantes entre elles dépendent bien entendu du réseau fixe à déployer. A titre d'exemple, toutes les communications radiofréquences sont effectuées dans la bande UHF, notamment à 868 MHz.

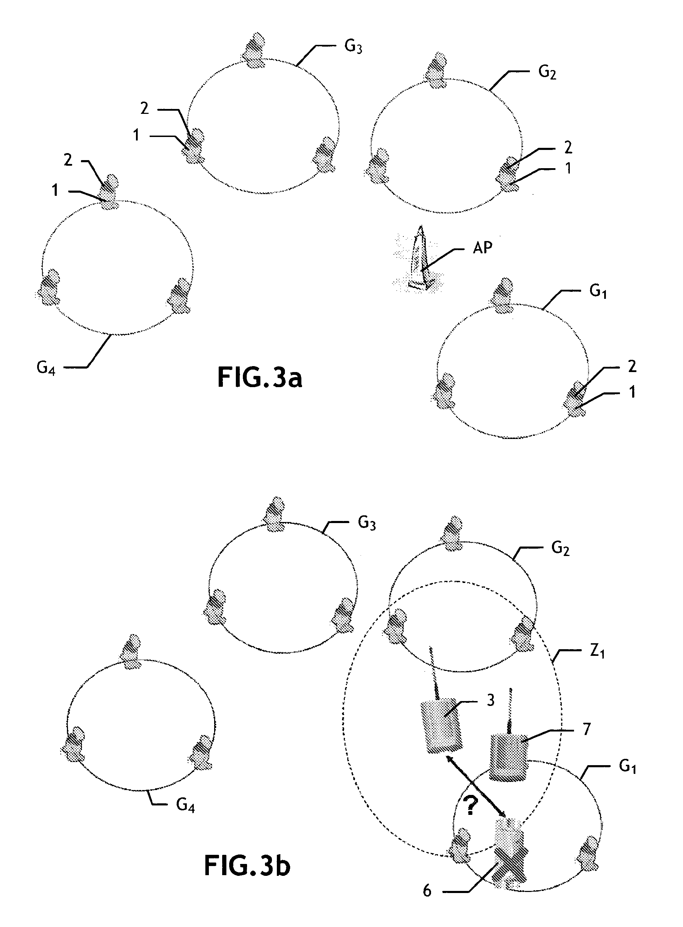

Un exemple d'utilisation du système d'aide au déploiement d'un réseau conforme à la présente invention va à présent être décrit, en référence aux figures 3a à 3j, qui illustrent schématiquement les différentes étapes successives mises en oeuvre par un installateur.

On part de l'hypothèse non limitative que le réseau fixe à déployer est destiné à couvrir la configuration géographique illustrée sur la figure 3a, ce réseau devant servir à la transmission par voie radio des données de mesure délivrées par une pluralité de compteurs 1 depuis des modules 2 de communication radiofréquence associés aux compteurs 1, à destination d'un point d'accès ou collecteur principal. Les positions des compteurs, et donc de leurs modules 2 de communication radiofréquence associés est ici connue et imposée par le réseau de distribution. On suppose également que l'emplacement géographique AP du point d'accès ou collecteur principal est également connu et imposé.

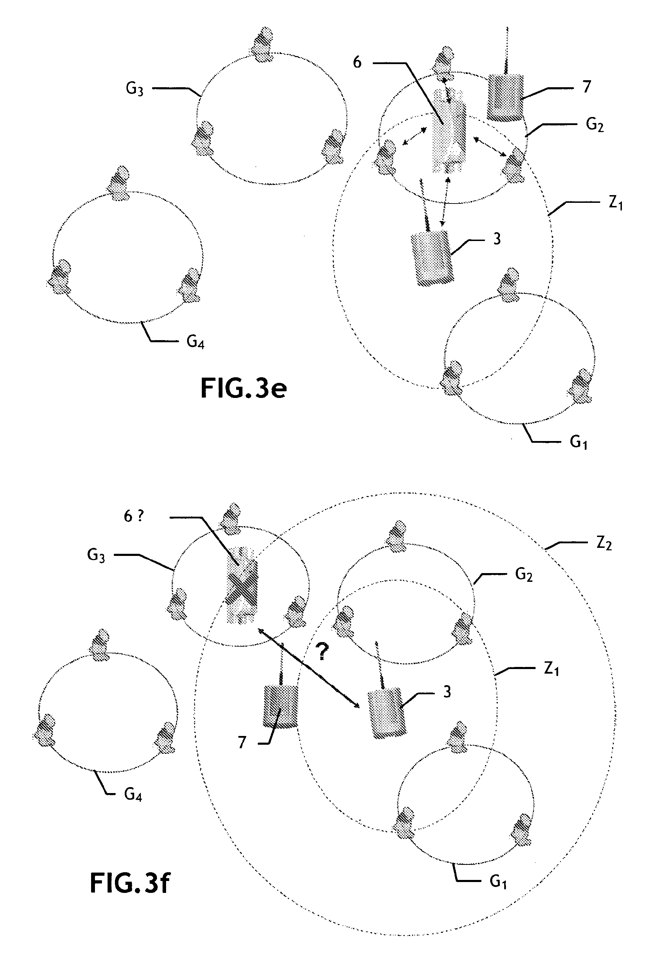

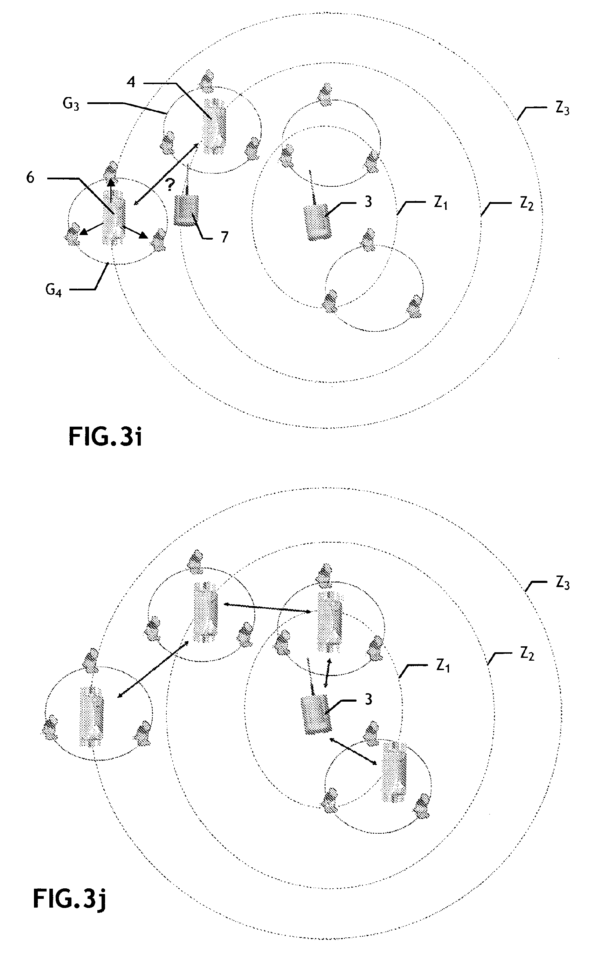

On constate sur la figure 3a que les compteurs sont concentrés en plusieurs groupes, quatre groupes G₁ à G₄ dans l'exemple illustré, qui sont situés plus ou moins près de l'emplacement AP. Plus précisément, les deux groupes G₁ et G₂ sont situés ou au moins partiellement recouverts par une première zone de couverture (référencée Z₁ sur les figures 3b et suivantes) de l'emplacement AP, le groupe G₃ est situé dans une seconde zone de couverture (référencée Z₂ sur les figures 3f et suivantes), et le groupe G₄ est situé dans une troisième zone de couverture (référencée Z₃ sur les figures 3i et suivantes).

Alors qu'une modélisation sur plan selon les techniques de l'art antérieur ne permettrait que de déterminer le nombre de collecteurs intermédiaires nécessaire au déploiement du réseau (en l'occurrence quatre pour l'exemple illustré ici), le système va permettre de connaître très précisément les emplacements géographiques de ces futurs collecteurs intermédiaires.

L'utilisation du système conformément à l'invention va consister à déterminer successivement les emplacements futurs préférés des collecteurs intermédiaires, en commençant par les collecteurs de premier niveau situés au plus proche du point d'accès, et en déterminant de proche en proche les positions des collecteurs intermédiaires à des niveaux supérieurs en s'éloignant du point d'accès.

L'installateur pourvu de sa valisette comportant le système d'aide au déploiement du réseau procèdera de préférence comme il suit :
a1) Dans un premier temps, il se rend à l'emplacement AP et place le premier appareil mobile 3 simulant le fonctionnement radiofréquence dudit point d'accès ou collecteur principal à l'emplacement géographique AP correspondant à l'emplacement futur désiré ou imposé du point d'accès ou collecteur principal du réseau ;
a2) Puis, il procède à la détermination des emplacements possibles pour les collecteurs intermédiaires de premier niveau, c'est-à-dire ceux se trouvant le plus près du point d'accès. Pour ce faire, il doit déterminer, pour chaque groupe de modules de communication radiofréquence associés à des compteurs situés au moins partiellement dans une première zone de couverture du point d'accès (dans l'exemple la zone Z₁ et les groupes G₁ et G₂), l'emplacement géographique futur d'un collecteur intermédiaire de premier niveau. Pour cela, il utilise successivement, le mode de fonctionnement point d'accès/collecteur M₁ et le mode écoute M₃ pour une ou plusieurs positions de l'appareil mobile de mesure 6 et relève les informations de positionnement correspondant à la première position de l'appareil mobile de mesure 6 pour laquelle l'information obtenue sur les moyens de visualisation de l'unité portative 7 correspond à une qualité suffisante de la liaison radiofréquence tant dans le mode de fonctionnement point d'accès/collecteur M₁ que dans le mode écoute M₃;
a3) Puis, il procède à la détermination des emplacements possibles pour les collecteurs intermédiaires de deuxième niveau. Pour ce faire, il doit déterminer, pour chaque groupe de modules de communication radiofréquence associés à des compteurs situés au moins partiellement dans une zone de couverture du point d'accès supérieure à la première zone (dans l'exemple, la zone Z₂ et le groupe G₃), l'emplacement géographique futur d'un collecteur intermédiaire d'un deuxième niveau en plaçant le deuxième appareil mobile 4 dans la position désignée par les informations de positionnement relevées au premier niveau. Pour cela, il utilise successivement le mode de fonctionnement collecteur/collecteur M₂ et le mode écoute M₃ pour une ou plusieurs positions de l'appareil mobile de mesure 6, et il relève les coordonnées géographiques de la première position pour laquelle l'information obtenue sur les moyens de visualisation de l'unité portative 7 correspond à une qualité suffisante de la liaison radiofréquence tant dans le mode de fonctionnement collecteur/collecteur M₂ que dans le mode écoute M₃;
a4) La détermination des emplacements futurs optimaux pour les collecteurs de niveaux encore supérieurs s'effectue exactement de la même manière, en réitérant l'étape a3) précédente, et en testant les liaisons entre le deuxième appareil mobile 4 placé à l'un des emplacements déterminés pour un niveau inférieur et un ou plusieurs emplacements possibles de l'appareil mobile de mesure 6 pour le niveau immédiatement supérieur (dans l'exemple, la zone Z₃ et le groupe G₄).

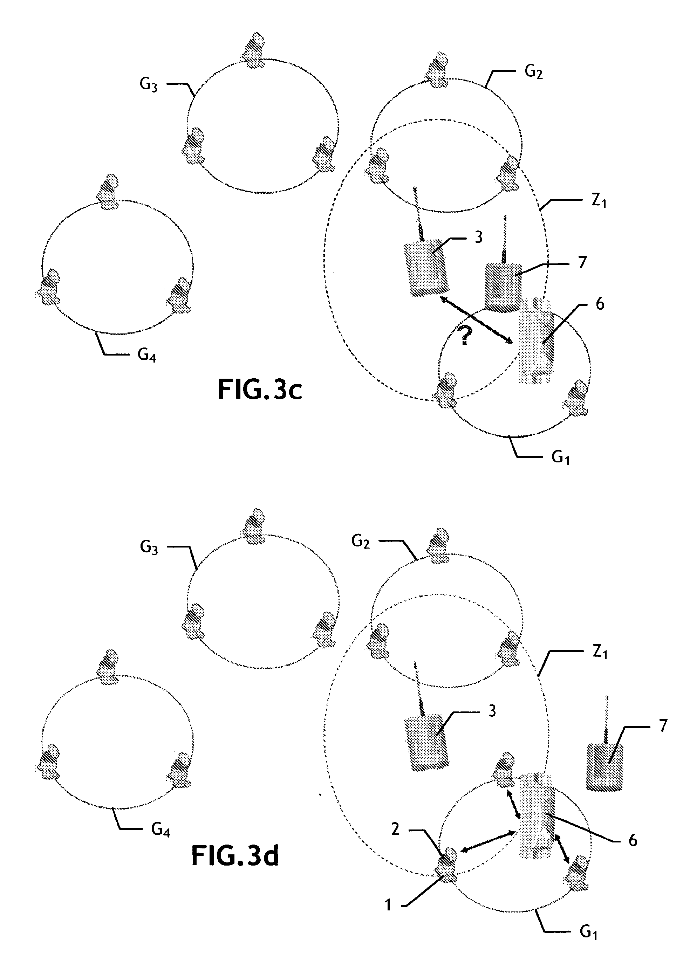

Les figures 3b et 3c illustrent l'application des étapes a1) et a2) précédemment décrites au déploiement du réseau pour le contexte de la figure 3a, pour le premier groupe G₁ de compteurs 1. Ces deux figures illustrent plus précisément la situation dans laquelle la position jugée optimale tant pour la liaison avec le point d'application qu'avec les modules de communication radiofréquence a été déterminée pour deux positions successives de l'appareil de mesure 6. Comme illustré sur la figure 3b et conformément à l'étape a2), l'installateur procède au test pour un premier emplacement possible pour l'appareil mobile de mesure 6. Plus précisément, il procède comme suit :
a21) il place l'appareil mobile de mesure 6 à un premier emplacement (voir figure 3b) dans une zone proche du groupe G₁ de modules 2 de communication radiofréquence associés aux compteurs 1 ;
a22) il commande, à partir de l'unité portative 7 de commande et de visualisation, par appui sur le bouton 70a, le fonctionnement de l'appareil de mesure 6 dans le mode point d'accès/collecteur M₁; et il vérifie par l'intermédiaire des moyens de visualisation de l'unité de commande et de visualisation 7 si l'information reçue correspond ou non à une qualité suffisante de la liaison radiofréquence entre le premier appareil mobile 3 et l'appareil de mesure 6. On considère ici qu'une seule diode électroluminescente 72 de l'ensemble de quatre diodes correspondant à ce test s'allume. L'installateur conclut alors directement, sans avoir à interpréter plus avant les résultats, que l'emplacement n'est pas satisfaisant.
a23) il choisit alors de déplacer l'appareil mobile 6 de mesure vers un second emplacement, tel qu'illustré sur la figure 3c, et il recommence le test décrit en a22) pour ce nouvel emplacement. Ici, on prend l'hypothèse que trois diodes électroluminescentes 72 vont s'allumer. L'installateur conclut alors, tout aussi directement, que l'emplacement est cette fois-ci satisfaisant pour ce qui concerne la liaison radiofréquence entre le premier appareil mobile 3 et l'appareil de mesure 6.
a24) Il va alors contrôler si la liaison radiofréquence entre l'appareil de mesure 6 et les modules 2 de communication radiofréquence du groupe G₁ est également satisfaisante (figure 3d). Pour ce faire, il doit utiliser l'appareil portatif de télé relève 5 (non représenté sur la figure 3d), pour initier un échange de données entre cet appareil portatif et chacun des modules 2 de communication radiofréquence. Dans le même temps, l'installateur commande, à partir de l'unité portative 7 de commande et de visualisation, par appui sur le bouton 70c, le fonctionnement de l'appareil de mesure 6 dans le mode écoute M₃ de manière à permettre à ce dernier d'intercepter le signal de réponse émis par chacun des modules 2, et mesurer l'intensité du signal intercepté. Enfin, il vérifie, par l'intermédiaire des moyens de visualisation de l'unité de commande et de visualisation 7, si l'information reçue correspond ou non à une qualité suffisante de la liaison radiofréquence entre les modules 2 et l'appareil mobile de mesure 6. On considère ici qu'au moins trois diodes électroluminescente 72 de l'ensemble de quatre diodes correspondant à ce test s'allument. L'installateur conclut alors directement, sans avoir à interpréter plus avant les résultats, que l'emplacement est également satisfaisant pour ce qui concerne une liaison radiofréquence entre les modules 2 du groupe G₁ et l'appareil de mesure 6. A ce stade des tests, l'installateur peut dès lors conclure que l'emplacement des figures 3c et 3d correspond à un emplacement futur possible pour un collecteur intermédiaire de premier niveau. Il relève ainsi ces coordonnées géographiques exactes, de préférence tant en termes de positionnement, y compris l'altitude, que d'orientation de l'antenne. Il peut s'arrêter là en ce qui concerne la détermination d'un emplacement pour le groupe G₁. En variante, il peut en profiter pour tester d'autres emplacements possibles pour le groupe G₁ en recommençant l'étape a2) pour d'autres emplacements géographiques.

La figure 3e illustre l'application de l'étape a2) précédemment décrite au déploiement du réseau pour le contexte de la figure 3a, pour le deuxième groupe G₂ de compteurs 1. Cette figure illustre plus précisément la situation dans laquelle la position jugée optimale tant pour la liaison avec le point d'application qu'avec les modules de communication radiofréquence a été déterminée dès la première position. Pour ne pas multiplier le nombre de figures, on a représenté sur la figure 3e le résultat du test selon le mode M₁ (voir étape a23) ci-dessus) et le résultat du test selon le mode M₃ (voir étape a24) ci-dessus), les deux tests conduisant l'installateur à la conclusion que les liaisons entre l'appareil mobile de mesure 6 d'une part, et le premier équipement mobile 3 ou les modules 2 de communication des compteurs d'autre part, sont de qualités satisfaisantes. Là encore, il relève les coordonnées géographiques exactes de cet emplacement.

Les figures 3f à 3h illustrent l'application de l'étape a3) précédemment décrite pour la détermination d'un emplacement de deuxième niveau (zone de couverture Z₂), associé au groupe G₃ de compteurs.

En fait, en pratique, l'installateur ne connaît pas l'étendue de la première zone Z₁ mais le système d'aide au déploiement va l'aider à savoir à quel moment il change de niveau. Plus précisément, la figure 3f schématise la façon dont l'installateur va se rendre compte qu'il n'est plus dans la première zone Z₁, mais dans un niveau supérieur Z₂. Pour ce faire, il suffira à l'installateur de constater qu'il lui est impossible, après réitération de l'étape a22) précédemment décrite, de trouver un emplacement pour lequel il obtiendra une qualité suffisante de liaison entre l'appareil mobile de mesure 6 et le premier équipement mobile 3, le test étant effectué toujours par commande radiofréquence C, depuis l'unité de commande et de visualisation 7, de l'appareil 6 pour qu'il fonctionne selon le mode point d'accès/collecteur M₁.

En conséquence, l'installateur sait qu'il doit à présent rechercher à déterminer l'emplacement de deuxième niveau.

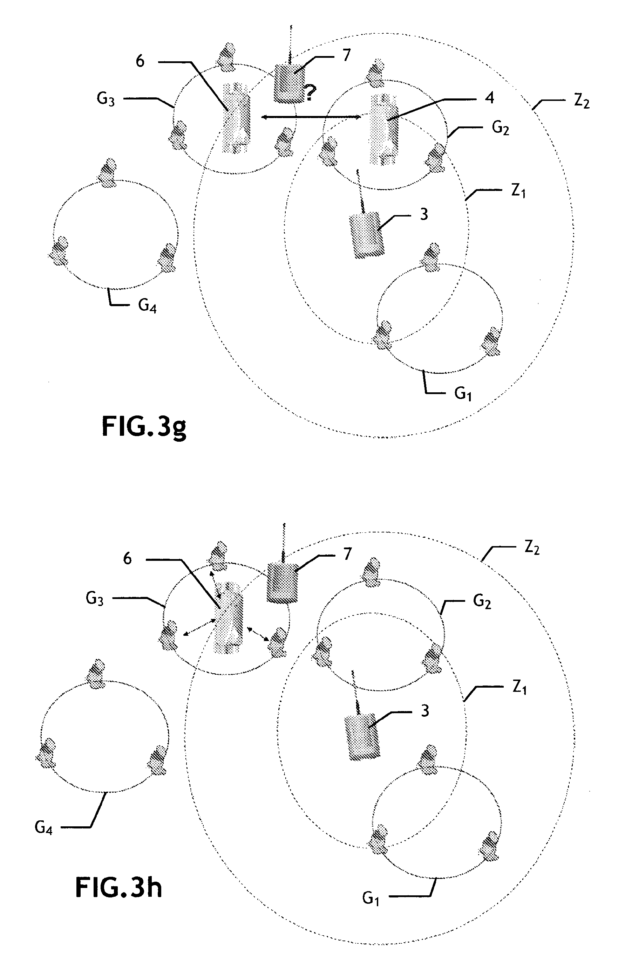

Les figures 3g et 3h correspondent aux tests de liaisons successifs effectués pour la recherche d'un emplacement de deuxième niveau. L'installateur doit procéder comme suit pour mettre en oeuvre l'étape a3) précitée :
a31) il place tout d'abord le deuxième appareil mobile 4 (celui apte à simuler le fonctionnement en réception et en relais radiofréquence d'un collecteur intermédiaire) à un emplacement du premier niveau testé comme satisfaisant (voir figure 3g) ;
a32) il place l'appareil mobile de mesure 6 à un premier emplacement dans une zone proche du groupe G₂ de modules 2 de communication radiofréquence associés aux compteurs 1(voir figure 3g) ;
a33) il commande, à partir de l'unité portative 7 de commande et de visualisation, par appui sur le bouton 70b, le fonctionnement de l'appareil de mesure 6 dans le mode collecteur/collecteur M₂; et il vérifie par l'intermédiaire des moyens de visualisation de l'unité de commande et de visualisation 7 si l'information reçue correspond ou non à une qualité suffisante de la liaison radiofréquence entre le deuxième appareil mobile 4 et l'appareil de mesure 6. Ici, on prend l'hypothèse que quatre diodes électroluminescentes 72 vont s'allumer. L'installateur conclut alors, tout aussi directement, que l'emplacement est cette fois-ci satisfaisant pour ce qui concerne la liaison radiofréquence entre le premier appareil mobile 3 et l'appareil de mesure 6. Si tel n'avait pas été le cas, l'installateur aurait dû réitérer ce test pour un autre emplacement géographique de l'appareil de mesure 6.
a34) Il va alors contrôler si la liaison radiofréquence entre l'appareil de mesure 6 et les modules 2 de communication radiofréquence du groupe G₃ est également satisfaisante (figure 3h). Pour ce faire, il doit utiliser l'appareil portatif de télé relève 5 (non représenté sur la figure 3h), pour initier un échange de données entre cet appareil portatif 5 et chacun des modules 2 de communication radiofréquence. Dans le même temps, l'installateur commande, à partir de l'unité portative 7 de commande et de visualisation, par appui sur le bouton 70c, le fonctionnement de l'appareil de mesure 6 dans le mode écoute M₃ de manière à permettre à ce dernier d'intercepter le signal de réponse émis par les modules 2, et mesurer l'intensité du signal intercepté. Enfin, il vérifie, par l'intermédiaire des moyens de visualisation de l'unité de commande et de visualisation 7, si l'information reçue correspond ou non à une qualité suffisante de la liaison radiofréquence entre les modules 2 et l'appareil de mesure 6. On considère ici qu'au moins trois diodes électroluminescente 72 de l'ensemble de quatre diodes correspondant à ce test s'allument. L'installateur conclut alors directement, sans avoir à interpréter plus avant les résultats, que l'emplacement est également satisfaisant pour ce qui concerne une liaison radiofréquence entre les modules 2 du groupe G₃ et l'appareil de mesure 6. A ce stade des tests, l'installateur peut dès lors conclure que l'emplacement des figures 3g et 3h correspond à un emplacement futur possible pour un collecteur intermédiaire de deuxième niveau. Il relève ainsi ces coordonnées géographiques exactes, de préférence tant en termes de positionnement, y compris l'altitude, que d'orientation de l'antenne. Tout comme dans le cas du premier niveau, il peut choisir de s'arrêter là en ce qui concerne la détermination d'un emplacement pour le groupe G₂ ou en profiter pour tester d'autres emplacements possibles en recommençant l'étape a3).

La figure 3i illustre l'application de l'étape a4) précédemment décrite au déploiement du réseau pour le contexte de la figure 3a, pour le groupe G₄ de compteurs 1.

Comme dans le cas précédent (passage de la zone Z₁ à la zone Z₂) l'installateur ne connaît pas l'étendue de la première zone Z₂ mais, là encore, c'est le système d'aide au déploiement qui va l'aider à savoir à quel moment il change de niveau. Ici, l'installateur va se rendre compte qu'il n'est plus dans la deuxième zone Z₂, mais dans un niveau supérieur Z₃, en constatant qu'il lui est impossible, après réitération de l'étape a33) précédemment décrite, de trouver un emplacement pour lequel il obtiendra une qualité suffisante de liaison entre l'appareil mobile de mesure 6 et le deuxième équipement mobile 4, le test étant effectué toujours par commande, depuis l'unité de commande et de visualisation 7, de l'appareil 6 pour qu'il fonctionne selon le mode collecteur/collecteur M₂.

En conséquence, il va à présent rechercher à déterminer l'emplacement de troisième niveau. Pour ce faire, il va procéder exactement comme décrit dans les étapes précédentes a31) à a34), en plaçant l'appareil mobile de mesure 6 à l'emplacement de troisième niveau à tester, et le deuxième équipement mobile 4 à un emplacement du deuxième niveau préalablement jugé satisfaisant, et en testant, toujours de la même manière, d'une part, la qualité de liaison entre l'appareil de mesure 6 et le deuxième équipement 4 (mode de fonctionnement M₂) , et d'autre part la qualité de liaison entre l'appareil de mesure 6 et chacun des module 2 du groupe G₄ (mode de fonctionnement M₃ combiné à l'utilisation de l'appareil portatif 5 de télé relève). Par souci de simplification, la figure 3i) illustre le cas où les deux tests sont satisfaisants dès le premier positionnement.

A l'issue de tous ces tests effectués avec le système d'aide au déploiement selon l'invention, l'installateur dispose donc du relevé de l'ensemble des positions géographiques (positionnement et orientation) qu'il conviendra d'utiliser pour les collecteurs intermédiaires, lors de l'implantation effective du réseau. La topologie complète du réseau fixe (positions du point d'accès, des modules 2 et des collecteurs intermédiaires) est ainsi complètement déterminée, comme illustré sur la figure 3j. Bien que cela n'ait pas été décrit dans le cadre du déploiement du réseau des figures 3a à 3j, on rappelle que l'unité portative de commande et de visualisation 7 est de préférence apte à mesurer également le taux d'occupation de la fréquence utilisée, préalablement à tout échange avec le dispositif mobile de mesure 6, et alerte visuellement l'installateur en cas d'occupation trop importante de la fréquence, rendant les mesures impossibles.

Bien que le système ait été décrit dans le cadre de la conception d'un nouveau réseau fixe, on notera qu'il est tout à fait aussi simple d'étendre ou de compléter la couverture d'un réseau fixe déjà existant grâce à l'utilisation du système d'aide au déploiement selon l'invention. Il suffit pour ce faire de partir des collecteurs intermédiaires déjà implantés, et de définir, de proche en proche, les collecteurs intermédiaires supplémentaires qu'il conviendrait d'ajouter.

## Revendications

1. Système d'aide au déploiement d'un réseau fixe de télé relève de compteurs, le réseau fixe à déployer étant du type permettant à un point d'accès ou collecteur principal de récupérer, par voie radio, des données de mesure d'une pluralité de compteurs (1) transmises par l'intermédiaire d'un module (2) de communication radiofréquence associé à chaque compteur, et relayées à destination dudit point d'accès ou collecteur principal par l'intermédiaire d'au moins un collecteur intermédiaire, le système étant **caractérisé en ce qu'**il comporte :
- un premier appareil mobile (3) simulant le fonctionnement radiofréquence dudit point d'accès ou collecteur principal,
- un deuxième appareil mobile (4) simulant le fonctionnement en réception et en relais radiofréquence d'un collecteur intermédiaire,
- un appareil portatif de télé relève (5) apte à échanger des données avec chaque module (2) de communication radiofréquence,
- un appareil mobile de mesure (6) simulant le fonctionnement en réception radiofréquence d'un collecteur intermédiaire ; et
- une unité portative (7) de commande radiofréquence et de visualisation,
**en ce que** l'unité portative (7) est apte à commander par voie radio le fonctionnement de l'appareil mobile (6) de mesure dans trois modes de fonctionnement distincts :
- un mode point d'accès/collecteur (M₁) dans lequel l'appareil mobile de mesure (6) initie un échange de communication radiofréquence avec le premier appareil mobile (3) simulant le fonctionnement du point d'accès, et effectue une mesure indicative de l'intensité du signal qu'il reçoit du premier appareil mobile (3) ;
- un mode collecteur/collecteur (M₂) dans lequel l'appareil mobile de mesure (6) initie un échange de communication radiofréquence avec le deuxième appareil mobile (4) simulant le fonctionnement du collecteur intermédiaire, et effectue une mesure indicative de l'intensité du signal qu'il reçoit du deuxième appareil mobile (4) ;
- un mode d'écoute (M₃) dans lequel l'appareil mobile de mesure (6) intercepte un signal de réponse transmis par un module (2) de communication radiofréquence en réponse à un signal d'interrogation émis par l'appareil portatif de télé relève (5), et effectue une mesure indicative de l'intensité du signal intercepté ;
et **en ce que** l'unité portative (7) est apte à recevoir, par voie radio, ladite mesure effectuée dans chacun des trois modes de fonctionnement et comporte des moyens (72) de visualisation d'une information relative à la qualité de la liaison déterminée à partir de ladite mesure.

2. Système selon la revendication 1, **caractérisé en ce que** l'unité portative (7) comporte trois boutons (70a-70c) de commande à actionnement manuel pour permettre la commande du fonctionnement de l'appareil mobile de mesure (6) dans l'un des trois modes de fonctionnement.

3. Système selon l'une quelconque des revendications précédentes, **caractérisé en ce que** les moyens (72) de visualisation de l'unité portative (7) comportent des diodes électroluminescentes.

4. Système selon la revendication 3, **caractérisé en ce que** les moyens (72) de visualisation comportent trois ensembles de diodes électroluminescentes, chaque ensemble étant affecté à la visualisation de l'information relative à la qualité de la liaison pour l'un des trois modes de fonctionnement, et **en ce qu'**un nombre de diodes de chaque ensemble, fonction de la qualité de la liaison, est contrôlé pour s'allumer.

5. Système selon la revendication 4, **caractérisé en ce que** chaque ensemble comporte quatre diodes électroluminescentes, et **en ce qu'**un nombre égal à deux de diodes allumées permet de conclure à une liaison radiofréquence satisfaisante.

6. Système selon l'une quelconque des revendications précédentes, **caractérisé en ce que** l'unité portative (7) de commande radiofréquence et de visualisation est en outre apte à mesurer automatiquement le taux d'occupation de fréquence utilisée pour les communications, préalablement à tout échange radiofréquence entre l'unité portative (7) et l'appareil mobile de mesure (6).

7. Système selon la revendication 6, **caractérisé en ce que** l'unité portative (7) de commande et de visualisation comporte une diode électroluminescente additionnelle (73) contrôlée pour être allumée lorsque le taux d'occupation de la fréquence est supérieur à un seuil prédéterminé.

8. Système selon l'une quelconque des revendications précédentes, **caractérisé en ce que** toutes les communications radiofréquences sont effectuées dans la bande UHF, notamment à 868 MHz.

9. Utilisation du système d'aide au déploiement d'un réseau fixe selon l'une quelconque des revendications précédentes pour la télé relève des données de mesure d'une pluralité de compteurs (1) transmises par l'intermédiaire d'un module (2) de communication radiofréquence associé à chaque compteur, **caractérisée en ce qu'**elle consiste à :
a1) placer le premier appareil mobile (3) simulant le fonctionnement radiofréquence dudit point d'accès ou collecteur principal à l'emplacement géographique futur désiré (AP) du point d'accès ou collecteur principal du réseau ;
a2) déterminer, pour chaque groupe (G₁ ; G₂) de modules (2) de communication radiofréquence associés à des compteurs (1) situés au moins partiellement dans une première zone (Z₁) de couverture du point d'accès, l'emplacement géographique futur d'un collecteur intermédiaire de premier niveau en commandant successivement, à partir de l'unité portative (7), le fonctionnement de l'appareil mobile de mesure (6) selon le mode point d'accès/collecteur (M₁) et le mode écoute (M₃) pour une ou plusieurs positions de l'appareil mobile de mesure (6), et en relevant les informations de positionnement correspondant à la première position de l'appareil mobile de mesure (6) pour laquelle l'information obtenue sur les moyens de visualisation de l'unité portative (7) correspond à une qualité suffisante de la liaison radiofréquence tant dans le mode point d'accès/collecteur (M₁) que dans le mode écoute (M₃);
a3) déterminer, pour chaque groupe (G₃) de modules de communication radiofréquence associés à des compteurs situés au moins partiellement dans une zone de couverture (Z₂) du point d'accès supérieure à la première zone (Z₁), l'emplacement géographique futur d'un collecteur intermédiaire d'un deuxième niveau en plaçant le deuxième appareil mobile (4) dans la position désignée par les informations de positionnement relevées au premier niveau, en commandant successivement, à partir de l'unité portative (7), le fonctionnement de l'appareil mobile de mesure (6) selon le mode collecteur/collecteur (M₂) et le mode écoute (M₃) pour une ou plusieurs positions de l'appareil mobile de mesure (6), et en relevant les coordonnées géographiques de la première position pour laquelle l'information obtenue sur les moyens de visualisation de l'unité portative (7) correspond à une qualité suffisante de la liaison radiofréquence tant dans le mode collecteur/collecteur (M₂) que dans le mode écoute (M₃);
a4) réitérer l'étape a3) pour la détermination d'emplacements futurs optimaux pour les collecteurs de chaque niveau supérieur au deuxième niveau, en s'éloignant du point d'accès, le deuxième appareil mobile (4) étant placé à l'une des positions déterminée pour le niveau immédiatement inférieur, et l'appareil mobile de mesure (6) étant placés à différentes positions du dit niveau supérieur.

## Patentansprüche

1. System zur Unterstützung für die Entwicklung eines festen Zählerfernablesenetzes, wobei das zu entwickelnde feste Netz von dem Typ ist, der einem Zugangspunkt oder Hauptkollektor ermöglicht, per Funk Messdaten einer Vielzahl von Zählern (1) zu erfassen, die mit Hilfe eines Funkfrequenzkommunikationsmoduls (2), das jedem Zähler zugeordnet ist, übertragen werden und in Richtung des Zugangspunktes oder Hauptkollektors relaisartig über mindestens einen Zwischenkollektor gesendet werden, wobei das System **dadurch gekennzeichnet ist, dass** es Folgendes aufweist:
- ein erste mobiles Gerät (3), das die Funkfrequenzfunktion des Zugangspunktes oder Hauptkollektors simuliert,
- ein zweites mobiles Gerät (4), das die Funkfrequenzempfangs- und -relaisfunktion eines Zwischenkollektors simuliert,
- ein tragbares Fernablesegerät (5), das geeignet ist, Daten mit jedem Funkfrequenzkommunikationsmodul (2) auszutauschen,
- ein mobiles Messgerät (6), das die Funkfrequenzempfangsfunktion eines Zwischenkollektors simuliert; und
- eine tragbare Funkfrequenzsteuer- und -anzeigeeinheit (7),
dass die tragbare Einheit (7) geeignet ist, per Funk die Funktion des mobilen Messgeräts (6) in drei unterschiedlichen Funktionsmodi zu steuern:
- einem Zugangspunkt-/Kollektor-Modus (M₁), in dem das mobile Messgerät (6) einen Funkfrequenzkommunikationsaustausch mit dem ersten mobilen Gerät (3) initiiert, das die Funktion des Zugangspunktes simuliert, und eine Anzeige-Messung der Stärke des Signals, das es von dem ersten mobilen Gerät (3) empfängt, durchführt;
- einem Kollektor-/Kollektor-Modus (M₂), in dem das mobile Messgerät (6) einen Funkfrequenzkommunikationsaustausch mit dem zweiten mobilen Gerät (4) initiiert, das die Funktion des Zwischenkollektors simuliert, und eine Anzeige-Messung der Stärke des Signals, das es von dem zweiten mobilen Gerät (4) empfängt, durchführt;
- einem Abhörmodus (M₃), in dem das mobile Messgerät (6) ein Antwortsignal abfängt, das von einem Funkfrequenzkommunikationsmodul (2) als Antwort auf ein Abfragesignal übertragen wird, das von dem tragbaren Fernablesegerät (5) gesandt wurde, und eine Anzeige-Messung der Stärke des abgefangenen Signals durchführt;
und dass die tragbare Einheit (7) geeignet ist, per Funk die in jedem der drei Funktionsmodi durchgeführte Messung zu empfangen, und Anzeigemittel (72) für eine Information betreffend die Qualität der Verbindung, die auf Basis der Messung bestimmt wurde, aufweist.

2. System nach Anspruch 1, **dadurch gekennzeichnet, dass** die tragbare Einheit (7) drei Steuerknöpfe (70a-70c) mit manueller Betätigung aufweist, um die Steuerung der Funktion des mobilen Messgeräts (6) in einem der drei Funktionsmodi zu ermöglichen.

3. System nach einem der vorhergehenden Ansprüche, **dadurch gekennzeichnet, dass** die Anzeigemittel (72) der tragbaren Einheit (7) Leuchtdioden aufweist.

4. System nach Anspruch 3, **dadurch gekennzeichnet, dass** die Anzeigemittel (72) drei Sätze von Leuchtdioden umfassen, wobei jeder Satz der Anzeige der Information in Zusammenhang mit der Qualität der Verbindung für einen der drei Funktionsmodi zugewiesen ist, und dass eine Anzahl von Dioden jedes Satzes in Abhängigkeit von der Qualität der Verbindung so kontrolliert werden, dass sie aufleuchten.

5. System nach Anspruch 4, **dadurch gekennzeichnet, dass** jeder Satz vier Leuchtdioden umfasst, und dass es eine Anzahl gleich zwei aufleuchtender Dioden ermöglicht, auf eine zufriedenstellende Funkfrequenzverbindung zu schließen.

6. System nach einem der vorhergehenden Ansprüche, **dadurch gekennzeichnet, dass** die tragbare Funkfrequenzsteuer- und - anzeigeeinheit (7) ferner geeignet ist, automatisch die Frequenzbelegungsrate, die für die Kommunikationen verwendet wird, vor jedem Funkfrequenzaustausch zwischen der tragbaren Einheit (7) und dem mobilen Messgerät (6) zu messen.

7. System nach Anspruch 6, **dadurch gekennzeichnet, dass** die tragbare Steuer- und Anzeigeeinheit (7) eine zusätzliche Leuchtdiode (73) aufweist, die so kontrolliert wird, dass sie aufleuchtet, wenn die Belegungsrate der Frequenz höher als eine vorbestimmte Schwelle ist.

8. System nach einem der vorhergehenden Ansprüche, **dadurch gekennzeichnet, dass** alle Funkfrequenzkommunikationen im UHF-Band, insbesondere bei 868 MHz, durchgeführt werden.

9. Verwendung des Systems zur Unterstützung für die Entwicklung eines festen Netzes nach einem der vorhergehenden Ansprüche für die Fernablesung der Messdaten einer Vielzahl von Zählern (1), die mit Hilfe eines Funkfrequenzkommunikationsmoduls (2), das jedem Zähler zugeordnet ist, übertragen werden, **dadurch gekennzeichnet, dass** sie darin besteht:
a1) das erste mobile Gerät (3), das die Funkfrequenzfunktion des Zugangspunktes oder Hauptkollektors simuliert, an der gewünschten zukünftigen geografischen Stelle (AP) des Zugangspunktes oder Hauptkollektors des Netzes aufzustellen;
a2) für jede Gruppe (G₁; G₂) von Funkfrequenzkommunikationsmodulen (2), die Zählern (1) zugeordnet sind, die sich zumindest teilweise in einer ersten Abdeckungszone (Z₁) des Zugangspunktes befinden, die zukünftige geografische Stelle eines Zwischenkollektors einer ersten Ebene zu bestimmen, wobei nacheinander von der tragbaren Einheit (7) aus die Funktion des mobilen Messgeräts (6) nach dem Zugangspunkt-/Kollektor-Modus (M₁) und dem Abhörmodus (M₃) für eine oder mehrere Positionen des mobilen Messgeräts (6) gesteuert wird, und wobei die Positionierungsinformationen, die der ersten Position des mobilen Messgeräts (6) entsprechen, abgelesen werden, für die die erhaltene Information an den Anzeigemitteln der tragbaren Einheit (7) einer ausreichenden Qualität der Funkfrequenzverbindung sowohl in dem Zugangspunkt-/Kollektor-Modus (M₁) als auch in dem Abhörmodus (M₃) entspricht;
a3) für jede Gruppe (G₃) von Funkfrequenzkommunikationsmodulen, die Zählern zugeordnet sind, die sich zumindest teilweise in einer Abdeckungszone (Z₂) des Zugangspunktes über der ersten Zone (Z₁) befinden, die zukünftige geografische Stelle eines Zwischenkollektors einer zweiten Ebene zu bestimmen, wobei das zweite mobile Gerät (4) in der Position angeordnet wird, die durch die Positionierungsinformationen, die auf der ersten Ebene abgelesen wurden, angezeigt wird, wobei nacheinander von der tragbaren Einheit (7) aus die Funktion des mobilen Messgeräts (6) nach dem Kollektor-/Kollektor-Modus (M₂) und dem Abhörmodus (M₃) für eine oder mehrere Positionen des mobilen Messgeräts (6) gesteuert wird, und wobei die geografischen Koordinaten der ersten Position, für die die erhaltene Information an den Anzeigemitteln der tragbaren Einheit (7) einer ausreichenden Qualität der Funkfrequenzverbindung sowohl in dem Kollektor-/Kollektor-Modus (M₂) als auch in dem Abhörmodus (M₃) entspricht, abgelesen werden;
a4) den Schritt a3) für die Bestimmung der optimalen zukünftigen Stellen für die Kollektoren jeder Ebene über der zweiten Ebene bei Entfernung von dem Zugangspunkt zu wiederholen, wobei das zweite mobile Gerät (4) an einer der bestimmten Positionen für die unmittelbar untere Ebene angeordnet wird, und wobei das mobile Messgerät (6) in verschiedenen Positionen der oberen Ebene angeordnet wird.

## Claims

1. System for assisting deployment of a fixed remote meter reading network, the fixed network to be deployed being of the type enabling an access point or main collector to recover measurement data by radio from a plurality of meters (1) transmitted by means of a radio frequency communication module (2) associated with each meter and relayed to the said access point or main collector by means of at least one intermediate collector, the system being **characterised in that** it includes:
- a first mobile device (3) which simulates the radio frequency operation of the said access point or main collector;
- a second mobile device (4) which simulates the radio frequency reception and relay operation of an intermediate collector;
- a portable remote reading device (5) capable of exchanging data with each radio frequency communication module (2);
- a mobile measuring device (6) which simulates the radio frequency reception operation of an intermediate collector; and
- a portable radio frequency control and display unit (7);
**in that** the portable unit (7) is capable of controlling the operation of the mobile measuring device (6) by radio in three distinct modes of operation:
- an access point/collector mode (M1) in which the mobile measuring device (6) initiates an exchange of radio frequency communication with the first mobile device (3) which simulates the operation of the access point, and effects a measurement which indicates the intensity of the signal which it receives from the first mobile device (3);
- a collector/collector mode in which the measurement mobile unit initiates radio communication with the second mobile unit for simulating the operation of the intermediate collector and effects a measurement indicating the intensity of the signal that it receives from the second mobile device (4);
- a listening mode (M3) in which the mobile measuring device (6) intercepts a response signal transmitted by a radio frequency communication module (2) in response to an interrogation signal emitted by the portable remote reading device (5) and effects a measurement which indicates the intensity of the intercepted signal;
and **in that** the portable device (7) is capable of receiving by radio the said measurement effected in each of the three operating modes and includes means (72) for displaying information relating to the quality of the link determined from the said measurement.

2. System as claimed in Claim 1, **characterised in that** the portable unit (7) includes three manually actuated control buttons to enable control of the operation of the mobile measuring device (6) in one of the three operating modes.

3. System as claimed in any one of the preceding claims, **characterised in that** the display means (72) of the portable unit (7) include light-emitting diodes.

4. System as claimed in Claim 3, **characterised in that** the display means (72) include three sets of light-emitting diodes, each set being assigned to the display of information relating to the quality of the link for one of the three operating modes, and **in that** a number of diodes of each set is controlled so as to be lit as a function of the quality of the link.

5. System as claimed in Claim 4, **characterised in that** each set of light-emitting diodes includes four light-emitting diodes, and **in that** if the number of diodes lit is equal to two it may be concluded that the radio frequency link is satisfactory.

6. System as claimed in any one of the preceding claims, **characterised in that** the portable radio frequency control and display unit (7) is moreover capable of automatically measuring the frequency occupancy level used for the communications prior to any radio frequency exchange between the portable unit (7) and the mobile measuring unit (6).

7. System as claimed in Claim 6, **characterised in that** the portable control and display unit (7) includes an additional light-emitting diode (73) which is lit when the frequency occupancy level is above a predetermined threshold.

8. System as claimed in any one of the preceding claims, **characterised in that** all radio frequency communications are effected in the UHF band, in particular at 868 MHz.

9. Use of the system for assisting deployment of a fixed network as claimed in any one of the preceding claims for remote reading of measurement data from a plurality of meters (1) transmitted by means of a radio frequency communication module (2) associated with each meter, **characterized in that** it consists of:
a1) placing the first mobile device (3) which simulates the radio frequency operation of the said access point or main collector at the desired future geographic location (AP) of the access point or main collector of the network;
a2) determining for each group (G1 ; G2) of radio frequency communication modules (2) associated with meters (1) situated at least partially in a first coverage zone (Z1) of the access point, the future geographical location of a first level intermediate collector by the use of the portable unit (7) to successively command the operation of the mobile measuring device (6) in the access point/collector mode (M1) and in the listening mode (M3) for one or more positions of the mobile measuring device (6), and recording the positioning information corresponding to the first position of the mobile measuring device (6) for which the information obtained on the display means of the portable unit (7) corresponds to a radio frequency link of sufficient quality both in the access point/collector mode (M1) and in the listening mode (M3);
a3) determining for each group (G3) of radio frequency communication modules associated with meters situated at least partially in a coverage zone (Z2) of the access point which is greater than the first zone (Z1), the future geographical location of a second level intermediate collector by placing the second mobile device (4) in the position designated by the positioning information recorded at the first level, by the use of the portable unit (7) to successively command the operation of the mobile measuring device (6) in the collector/collector mode (M2) and in the listening mode (M3) for one or more positions of the mobile measuring device (6), and recording the geographical co-ordinates of the first position for which the information obtained on the display means of the portable unit (7) corresponds to a radio frequency link of sufficient quality both in the collector/collector mode (M2) and in the listening mode (M3);
a4) repeating step a3) for determination of optimum future locations for the collectors of each level higher than the second level, moving away from the access point, the second mobile device (4) being placed at one of the positions determined for the immediately lower level, and the mobile measuring unit (6) being placed at different positions of the said higher level.
